# EUROPEAN PATENT SPECIFICATION

(11) **EP 3 397 024 B1**
(45) Date of publication and mention of the grant of the patent: **29.07.2020**
(21) Application number: 16880461.5
(22) Date of filing: 24.06.2016
(51) Int. Cl.: H05B 6/68, F24C 7/02, F24C 7/08

(54) **MICROWAVE OVEN CIRCUIT AND MICROWAVE OVEN**
MIKROWELLENOFENSCHALTUNG UND MIKROWELLENOFEN
CIRCUIT DE FOUR À MICRO-ONDES ET FOUR À MICRO-ONDES

(30) Priority: 29.12.2015 CN 201511027305; 29.12.2015 CN 201521139218 U; 29.12.2015 CN 201511030511
(43) Date of publication of application: 31.10.2018
(60) Divisional application: 19215533.1
(73) Proprietor: Guangdong Midea Kitchen Appliances Manufacturing Co., Ltd., Foshan, Guangdong 528311 (CN); Midea Group Co., Ltd., Foshan, Guangdong 528311 (CN)
(72) Inventor: LIN, Yueyue, Foshan, Guangdong 528311 (CN); ZHOU, Xiaojin, Foshan, Guangdong 528311 (CN)
(74) Representative: Rowlands, Stuart Michael
(86) International application number: PCT/CN2016/087159
(87) International publication number: WO 2017/113656

(56) References cited:
- WO-A1-2006/107045
- CN-A- 102 607 077
- CN-A- 102 679 418
- CN-A- 104 968 061
- CN-A- 105 485 731
- CN-A- 105 517 219
- US-A- 4 405 904
- US-A- 5 395 453
- US-A1- 2010 102 797
- US-A1- 2010 181 307

## Description

The present application claims the priority of the following patent applications:
Chinese Application No. 201511027305.2, filed in the Chinese Patent Office on December 29, 2015, and entitled "CONTROL METHOD AND CONTROL DEVICE OF MICROWAVE OVEN CIRCUIT AND MICROWAVE OVEN";
Chinese Application No. 201521139218.1, filed in the Chinese Patent Office on December 29, 2015, and entitled "MICROWAVE OVEN CIRCUIT AND MICROWAVE OVEN"; and
Chinese Application No. 201511030511.9, filed in the Chinese Patent Office on December 29, 2015, and entitled "MICROWAVE OVEN CIRCUIT AND MICROWAVE OVEN".

### Field of the Invention

The present invention relates to the technical field of microwave ovens, and in particular to a microwave oven circuit and a microwave oven.

### Background of the Invention

An inverter in a microwave oven circuit has the advantages of light weight, high power factor, continuously adjustable power and the like relative to a transformer power supply, and thus has been widely favored by users. With the extensive use of inverters, the repair rate in the market has been generally increased, and it can be seen from repair data that IGBTs (Insulated Gate Bipolar Transistors) and rectifier bridge stacks account for the most of the damage. The control mode at present has received severe challenges.

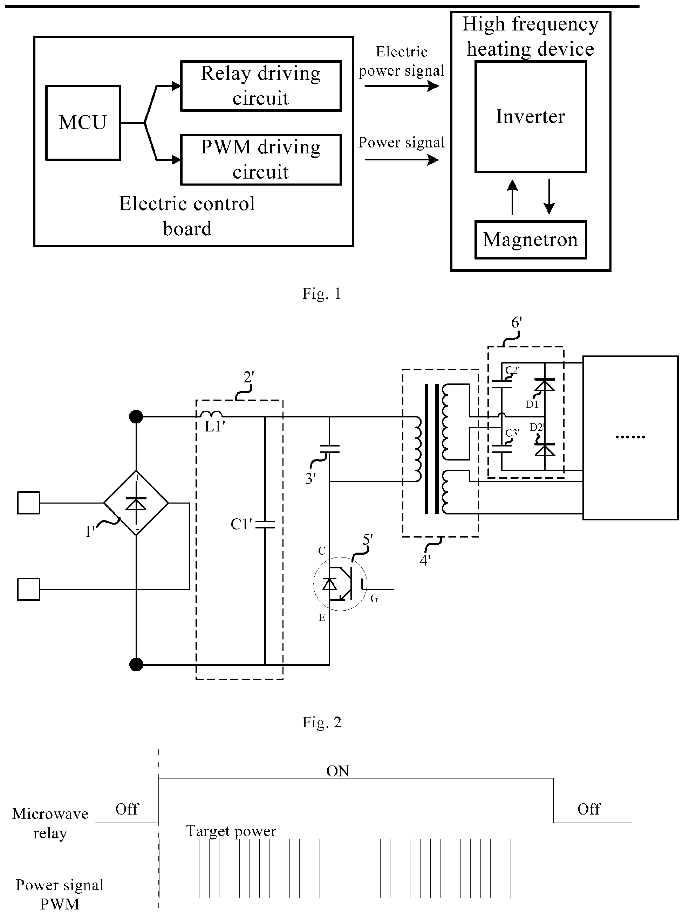

As shown in Fig. 1, an existing variable frequency microwave oven control system includes an electric control board and a high frequency heating device. The electronic control board includes an MCU, a relay driving module and a PWM (Pulse Width Modulation) driving module, the relay driving module transmits an electric power signal to an inverter in the high frequency heating device, and the PWM driving circuit transmits a power signal to the inverter in the high frequency heating device, and the inverter drives a magnetron to generate microwaves according to the received signal so as to achieve the purpose of heating food.

As shown in Fig. 2, which is a structural schematic diagram of the inverter in the existing microwave oven circuit, the working principle of the inverter is as follows: after being rectified by a rectifier bridge stack 1', electric supply flows through a filter circuit 2' consisting of an inductor L1' and a capacitor C1' and then is led to a resonant network consisting of a resonant capacitor 3' and a high frequency step-up transformer 4', and the resonant energy is controlled by the on-off of an IGBT 5' to be fed back to a secondary stage of the high frequency step-up transformer 4', a high voltage for driving the magnetron is generated through a voltage doubling circuit 6' consisting of high voltage capacitors C2', C3' and high voltage diodes D1', D2', and then is transmitted to the magnetron so as to drive the magnetron to generate microwaves.

The magnitude of the resonant current can be changed by changing the switching frequency of the IGBT 5' so as to change the power of the magnetron.

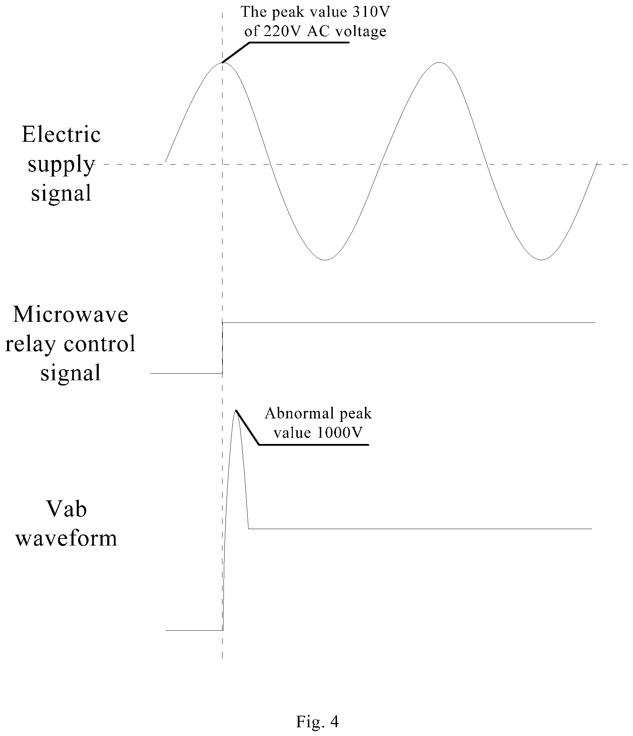

As shown in Fig. 3, in control timing proposed by the related art, when a microwave relay is started, it provides an electric power signal for the inverter and meanwhile transmits a target power signal PWM to the inverter to reach the desired power. However, when the microwave relay is turned on, if the voltage across the capacitor C2' in the inverter is not zero, if the voltage of the electric supply is higher at the moment, a higher abnormal voltage is generated across the rectifier bridge stack 1' at the peak value, which is up to more than 1,000 volts and is very likely to damage the bridge stack. It is specifically as shown in Fig. 4:
Fig. 4 shows a voltage waveform of the electric supply signal when the inverter is turned on, a control signal waveform of the microwave relay, and a voltage waveform (i.e., a Vab waveform) across the rectifier bridge stack 1' in the related art. Assuming that the electric supply is 220V AC, if the electric supply signal is at the peak value 310V, and the voltage across the capacitor C2' is 0 when the microwave relay is turned on, at the moment when the microwave relay is turned on, as the voltage across the capacitor C2' cannot be changed abruptly, the peak value 310V of the electric supply is directly added to the inductor LI', and due to the characteristic of the inductor (i.e., the current cannot be abruptly changed), a very large reverse voltage is generated to prevent the current from increasing, in this way, a very large voltage is generated at the front end, namely, the port of the rectifier bridge stack 1', which is up to 1000V and is very likely to damage the rectifier bridge stack 1'. The theoretical analysis is also consistent with the market feedback data, that is, the maintenance rate of the rectifier bridge stack 1' remains high.

Meanwhile, another component having a high maintenance rate is the IGBT 5', because the G pole voltage of the IGBT cannot exceed 25V, but in the existing control mode, when the microwave relay is turned on, the G pole of the IGBT occasionally has a voltage of higher than 33V.

Therefore, how to reduce the voltage across the rectifier bridge stack when the inverter is turned on to avoid damage to the rectifier bridge stack due to the excessively high voltage across the rectifier bridge stack, and meanwhile how to prevent the G pole of the IGBT from being damaged by the overlarge voltage have become technical problems to be solved urgently.

US2010/102797A1 relates to an operating state detection technique. An anode current detected by the anode current detection resistor of a magnetron is inputted into the A/D converter terminal of a microcomputer on a control panel circuit board side. The current is subjected to an analog-to-digital conversion to thereby obtain an anode voltage value. The microcomputer determines an operating state based on a plurality of the anode voltage values thus read.

US2010/181307A1 relates to an RF generator power supply comprising a first switched mode power supply (SMPS) connected in series to a second SMPS by a DC bus. A capacitor is arranged between the outputs of the first SMPS and inputs of the second SMPS to act as a smoothing capacitor for the first SMPS and to supply pulse energy to the second SMPS. The second SMPS has an output connected to an input of a step-up transformer and an output of the step-up transformer is connected to an input of a rectifier connectable to the RF generator.

US4405904A relates to a zero-crossing signal is generated in response to the zero-crossing of the current of an AC power source of a magnetron oscillator, and in response to the zero-crossing signal a triac connected between the magnetron oscillator and the AC power source is turned on to generate a microwave. The triac is turned off when the voltage of the AC power source becomes lower than a holding voltage of the triac.

US5395453A relates to an apparatus for controlling an oscillation output of a magnetron including a switch circuit controlled of ON/OFF states thereof by a pulse signal, a rectifying circuit for supplying microwave power pulses to the magnetron, and a transformer having a primary side and a secondary side. The primary side has a first terminal and a second terminal, where the first terminal is connected to an A.C. power supply, the second terminal is connected to the switch circuit. The secondary side is connected to the rectifying circuit. The switch circuit is turned ON/OFF by the pulse signal so that a duty factor of the microwave power pulses output from the rectifying circuit and a repetition frequency of the duty cycle thereof become constant.

CN102679418A relates to a household variable-frequency microwave oven, comprising a power supply circuit and further comprising a rectifying filtering circuit, a voltage switching circuit, a switching circuit, a voltage-multiplying output circuit and a magnetron, which are connected with one another in sequence, wherein an output end of the power supply circuit is connected with an input end of the rectifying filtering circuit; an output end of the rectifying filtering circuit is connected with an input end of the voltage switching circuit; an output end of the voltage switching circuit is connected with an input end of the switching circuit; an output end of the switching circuit is connected with an input end of the voltage-multiplying output circuit; an output end of the voltage-multiplying output circuit is connected with an input end of the magnetron; the household variable-frequency microwave oven comprises a detection circuit; the detection circuit comprises a voltage and current detection circuit and a microprocessor, which are connected with each other; and an output end of the voltage and current detection circuit is connected with an input end of the microprocessor.

CN104968061A relates to a microwave oven variable frequency power supply starting control device, which comprises a variable frequency power supply, a magnetron anode current detection module and a control module, wherein the magnetron anode current detection module is used for detecting anode current of the magnetron; and the control module is used for controlling the variable frequency power supply to enter a soft starting stage after the variable frequency power supply is power-on, controlling the variable frequency power supply to enter a pre-heating stage after the soft starting stage is over, judging whether the pre-heating stage is over according to the anode current of the magnetron and controlling the variable frequency power supply to enter a normal operation stage after the pre-heating stage is over.

CN102607077A relates to a microwave oven start control method, which comprises: (1) a controller starting to work and detect whether the AC is over zero, if so, the controller delaying by X ms, otherwise returning to re-detect; (2) the controller delaying after X ms, triggering a relay, otherwise returning to re-detect; (3) the controller sending a control signal with a time length of Y ms to trigger the relay communication after the relay is triggered, when the time is Y ms, turning off the relay, otherwise returning to re-detect; (4) the controller sending the signal with X-1 ms and Y+1 ms, when Y is equal to 8 ms, the program ending, the controller always sending the control signals to trigger the relay, at this time the microwave over opening, if Y is mot 8 ms, then returning to re-detect.

CN105485731A relates to a microwave oven circuit and a microwave oven. The microwave oven circuit comprises an electric control board and a high-frequency heating circuit. The electric control board comprises a relay drive circuit used for transmitting electricity signals to the high-frequency heating circuit, a power drive circuit used for transmitting power signals to the high-frequency heating circuit, a first filter circuit connected to the signal feedback end of the high-frequency heating circuit and used for filtering magnetron current signals fed back by the high-frequency heating circuit, an analog-digital conversion circuit connected to the first filter circuit and used for conducting analog-digital conversion processing on signals output by the first filter circuit and a controller connected to the analog-digital conversion circuit, the relay drive circuit and the power drive circuit and used for controlling the electricity signals transmitted by the relay drive circuit and controlling the power signals transmitted by the power drive circuit according to the signals output by the analog-digital conversion circuit.CN105517219A relates to a control method and device of a microwave oven circuit and a microwave oven. The microwave oven circuit comprises a magnetron and an inverter circuit driving the magnetron to operate. The control method comprises steps of: detecting the zero-crossing point (ZCP) of a commercial power signal powering the microwave oven circuit when the inverter circuit is required to be started; enabling the inverter circuit to be powered up when it is detect that the commercial power signal reaches the ZCP; inputting a first power signal with a frequency lower than a target frequency into the inverter circuit when the powered time length of the inverter circuit reaches a first preset time length; detecting the current of the magnetron; and inputting a second power signal with a frequency equal to the target frequency into the inverter circuit when the current of the magnetron reaches a preset current value. WO2006/107045A relates to an apparatus for controlling power for high frequency dielectric heating.

### Summary of the Invention

The present invention aims at solving at least one of the technical problems existing in the prior art or related art.

To this end, one objective of the present invention is to provide a new microwave oven circuit that can reduce the voltage across a rectifier bridge stack when an inverter is turned on to avoid damage to the rectifier bridge stack due to the excessively high voltage across the rectifier bridge stack, and meanwhile can avoid a G pole of an IGBT from being damaged by the overlarge voltage.

To achieve the above objectives, according to an embodiment of the first aspect of the present invention, a microwave oven circuit is provided as set out in claim 1.

According to the microwave oven circuit of the embodiment of the present invention, by performing the filtering processing on the magnetron current signal fed back by the high frequency heating circuit, performing the analog to digital conversion processing through the analog to digital conversion circuit and controlling by the controller the power signal transmitted by the power driving circuit according to the signal output by the analog to digital conversion circuit, the problem of power overshoot during the startup of an inverter circuit can be avoided, meanwhile an interference signal can be reduced as much as possible when the inverter circuit is turned on, for example, the voltage of the G pole of the IGBT and a reverse voltage across the rectifier bridge stack when the inverter circuit is turned on, in this way, the rectifier bridge stack is prevented from being damaged by the excessively high voltage across the rectifier bridge stack, and meanwhile, the G pole of the IGBT is prevented from being damaged by the overlarge voltage.

Specifically, the control process of the controller in the electric control board is as follows: When an instruction of starting the microwave oven is received, if it is detected that an electric supply signal reaches a zero crossing point, a fan circuit and a turntable circuit in the microwave oven circuit are controlled to be turned on, and after the fan circuit and the turntable circuit are controlled to be turned on for a certain time length, when the electric supply signal is detected to reach the zero crossing point, the inverter circuit is controlled to be powered on. After the inverter circuit is powered on, a power signal with a frequency lower than a target frequency is input to the inverter circuit after a period of delay time; and when the current in a magnetron reaches a predetermined current value, if it is detected that the electric supply signal for supplying power to the microwave oven circuit reaches the zero crossing point, a power signal with a frequency equal to the target frequency is input to the inverter circuit.

In the above control process, both a fan and a turntable are inductive loads, so electromagnetic radiation and voltage interference are generated when they are turned on, thus affecting the voltage of the G pole of the IGBT, therefore, when the instruction of starting the microwave oven is received, and when the electric supply signal is detected to reach the zero crossing point, the fan circuit and the turntable circuit are controlled to be turned on, and after a certain time length, when the electric supply signal is detected to reach the zero crossing point, the inverter circuit is controlled to be powered on (i.e., it is determined that the inverter circuit needs to be started), in this way, when the fan circuit and the turntable circuit are turned on, the interference to the voltage of the G pole of the IGBT can be effectively reduced so as to prevent the G pole of the IGBT from being damaged by the overlarge voltage and to prolong the service life of the IGBT.

By controlling the inverter circuit to be powered on when the electric supply signal is detected to reach the zero crossing point, the reverse voltage across the rectifier bridge stack can be effectively reduced when the inverter circuit is powered on, thereby improving the reliability of the microwave oven circuit and prolonging the service life of the rectifier bridge stack.

After the inverter circuit is powered on, the power signal is not directly input to the inverter circuit, but is input after a period of delay time, so that power-on initialization time can be reserved for electronic devices in the inverter circuit to ensure the working stability of the inverter circuit.

By firstly inputting the power signal with the frequency lower than the target frequency to the inverter circuit, and inputting the power signal with the frequency equal to the target frequency to the inverter circuit when it is detected that the current in the magnetron reaches the predetermined current value (the predetermined current value indicates that the magnetron starts working), the inverter circuit can be started at a smaller power, and when the magnetron starts working, the inverter circuit operates with full power (i.e., the power signal with the target frequency is input), thereby avoiding the problem of power overshoot during the startup of the inverter circuit.

The microwave oven circuit according to the above embodiment of the present invention can further have the following technical features:
According to one embodiment of the present invention, the high frequency heating circuit includes a magnetron used for generating microwaves; an inverter circuit connected to the magnetron and used for receiving the electric power signal transmitted by the relay driving circuit and the power signal transmitted by the power driving circuit, and driving the magnetron to generate the microwaves according to the electric power signal and the power signal; and a sampling feedback circuit used for sampling the current in the magnetron and feeding back a sampled magnetron current signal to the electric control board.

According to one embodiment of the present invention, the inverter circuit includes: a rectifier circuit connected to an AC power supply and used for rectifying AC input by the AC power supply; a second filter circuit connected to the rectifier circuit and used for performing filtering processing on a signal output by the rectifier circuit; a resonant circuit including a resonant capacitor and a high frequency step-up transformer, wherein the resonant capacitor is connected to two ends of the second filter circuit in parallel after being connected with an IGBT in series, and a primary coil of the high frequency step-up transformer is connected with the resonant capacitor in parallel; and a voltage doubling circuit connected to a secondary coil of the high frequency step-up transformer and used for generating a voltage for driving the magnetron.

According to one embodiment of the present invention, the rectifier circuit includes a rectifier bridge circuit.

According to one embodiment of the present invention, the second filter circuit includes an LC filter circuit.

According to the microwave oven circuit of the embodiment of the present invention, after the magnetron current signal is input to the first filter circuit, the voltage is divided by the first resistor and the second resistor and is clamped by the first clamp device and the second clamp device, so that the voltage is not higher than the DC power supply (VCC), nor lower than the GND (ground), and meanwhile, the filtering processing can be performed by the electrolytic capacitor and the capacitive element to convert the high frequency current signal into a low frequency DC signal. By connecting the capacitive element between the second end of the current limiting device and the ground, i.e., connecting the capacitive element to a position close to the output end of the first filter circuit, a better filtering effect can be achieved.

According to one embodiment of the present invention, the first clamp device includes a first diode, a cathode of the first diode is connected to the second end of the first resistor, and an anode of the first diode is grounded.

According to one embodiment of the present invention, the second clamp device includes a second diode, an anode of the second diode is connected to the second end of the first resistor, and a cathode of the second diode is connected to the DC power supply.

According to one embodiment of the present invention, the current limiting device includes a resistive element.

According to an embodiment of the present invention, a microwave oven is further provided, including the microwave oven circuit in any one of the above embodiments.

Additional aspects and advantages of the invention will be partially set forth in the following description, and a part will be obvious from the following description, or may be learned by the practice of the present invention.

### Brief Description of the Drawings

The above and/or additional aspects and advantages of the present invention will become apparent and easily understood from the following description of embodiments in conjunction with the drawings, wherein:
Fig. 1 shows a structural schematic diagram of a control system of a variable frequency microwave oven in related art;
Fig. 2 shows a schematic diagram of a circuit structure of an inverter in a microwave oven circuit in related art;
Fig. 3 shows a schematic diagram of control timing of the inverter in the microwave oven circuit in related art;
Fig. 4 shows a schematic diagram of a voltage waveform of an electric supply signal, a control signal waveform of a microwave relay and a voltage waveform across a rectifier bridge stack when the inverter is started in related art;
Fig. 5 shows a structural schematic diagram of a microwave oven circuit according to an embodiment of the present invention;
Fig. 6 shows a structural schematic diagram of an inverter circuit according to an embodiment of the present invention;
Fig. 7 shows a structural schematic diagram of a filter circuit in an electric control board according to an embodiment of the present invention;
Fig. 8 shows a schematic flow diagram of a control method of a microwave oven circuit according to an embodiment of the present invention;
Fig. 9 shows a structural block diagram of a control device of a microwave oven circuit according to an embodiment of the present invention;
Fig. 10 shows a schematic diagram of timing of signals in a control process of a microwave oven circuit according to an embodiment of the present invention;
Fig. 11 shows a process schematic diagram of starting the inverter as shown in Fig. 10;
Fig. 12 shows a process schematic diagram of turning off the inverter as shown in Fig. 10.

### Detailed Description of the Embodiments

In order that the above objectives, features and advantages of the present invention can be understood more clearly, the present invention will be further described in detail below in conjunction with the drawings and specific embodiments. It should be noted that the embodiments of the present application and the features in the embodiments can be combined with each other without conflict.

Many specific details are set forth in the following description in order to fully understand the present invention. However, the present invention can also be implemented in other manners than those described herein. Therefore, the protection scope of the present invention is not limited to the specific embodiments disclosed below.

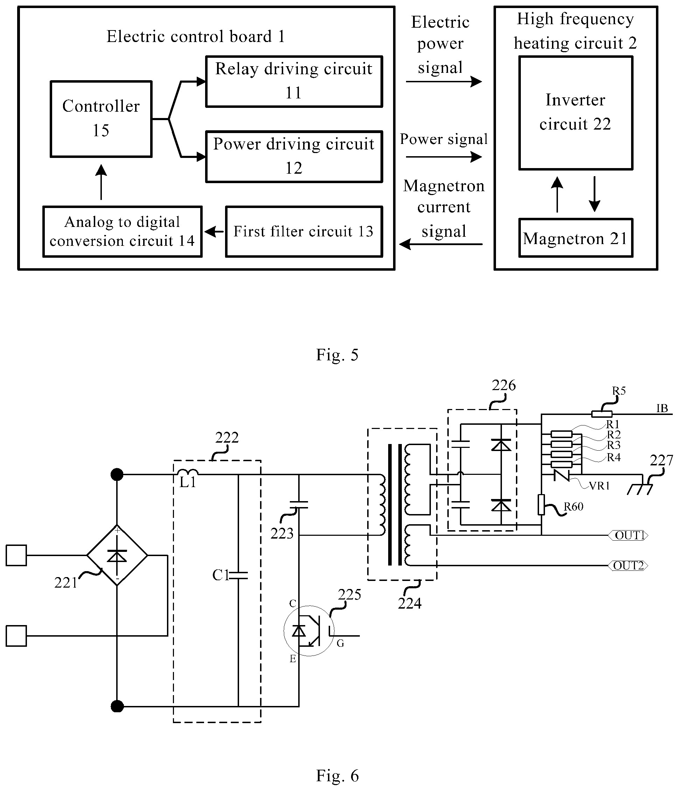

Fig. 5 shows a structural schematic diagram of a microwave oven circuit according to an embodiment of the present invention;

As shown in Fig. 5, the microwave oven circuit according to the embodiment of the present invention includes an electric control board 1 and a high frequency heating circuit 2; wherein the electric control board 1 includes:
a relay driving circuit 11 used for transmitting an electric power signal to the high frequency heating circuit 2; a power driving circuit 12 used for sending a power signal to the high frequency heating circuit 2; a first filter circuit 13 connected to a signal feedback end (not shown in Fig. 5) of the high frequency heating circuit 2 and used for performing filtering processing on a magnetron current signal fed back by the high frequency heating circuit 2; an analog to digital conversion circuit 14 connected to the first filter circuit 13 and used for performing analog to digital conversion processing on the signal output by the first filter circuit 13; and a controller 15 connected to the analog to digital conversion circuit 14, the relay driving circuit 11 and the power driving circuit 12 and used for controlling the electric power signal transmitted by the relay driving circuit 11 and controlling the power signal transmitted by the power driving circuit 12 according to the signal output by the analog to digital conversion circuit 14.

The microwave oven circuit according to the above embodiment of the present invention can further have the following technical features:
According to one embodiment of the present invention, the high frequency heating circuit 2 includes a magnetron 21 used for generating microwaves; an inverter circuit 22 connected to the magnetron 21 and used for receiving the electric power signal transmitted by the relay driving circuit 11 and the power signal transmitted by the power driving circuit 12, and driving the magnetron to generate the microwaves according to the electric power signal and the power signal; and a sampling feedback circuit (not shown in Fig. 5) used for sampling the current in the magnetron 21 and feeding back a sampled current signal of the magnetron 21 to the electric control board 1.

As shown in Fig. 6, the inverter circuit 22 according to one embodiment of the present invention includes:
a rectifier circuit 221 connected to an AC power supply and used for rectifying AC input by the AC power supply; a second filter circuit 222 connected to the rectifier circuit 221 and used for performing filtering processing on a signal output by the rectifier circuit 221; a resonant circuit including a resonant capacitor 223 and a high frequency step-up transformer 224, wherein the resonant capacitor 223 is connected to two ends of the second filter circuit 222 in parallel after being connected with an IGBT 225 in series, and a primary coil of the high frequency step-up transformer 224 is connected with the resonant capacitor 223 in parallel; and a voltage doubling circuit 226 connected to a secondary coil of the high frequency step-up transformer 224 and used for generating a voltage for driving the magnetron 21.

The sampling feedback circuit in the high frequency heating circuit 2 includes a current detection loop, wherein the current detection loop is composed of four resistors R1 to R4 and a varistor VR1, which are connected in parallel, R5 is a current limiting resistor, R60 is a dummy load, a chassis ground 227 is connected to the anode of the magnetron 21, the cathode of the magnetron 21 is connected to OUT1 and OUT2, and OUT1 and OUT2 are connected to the another winding of the secondary coil of the high frequency step-up transformer 224 for driving a filament voltage of the magnetron 21. When the magnetron 21 works, the current flows through the anode, i.e., the chassis ground 227, and flows to the cathode to form a loop, in this way, there is a voltage across R1 to R4, and a current signal IB in the magnetron is detected by detecting the voltage.

According to one embodiment of the present invention, the rectifier circuit 221 includes a rectifier bridge circuit.

According to one embodiment of the present invention, the second filter circuit 222 includes an LC filter circuit, namely, an LC filter circuit composed of an inductor L1 and a capacitor C1.

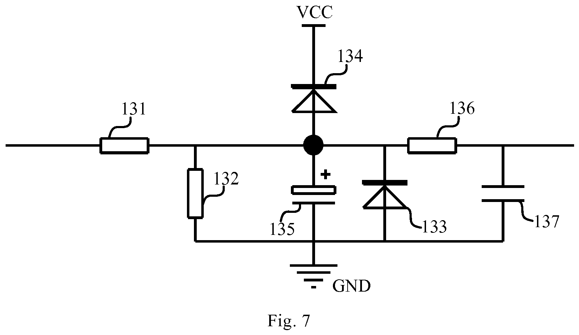

As shown in Fig. 7, according to one embodiment of the present invention, the first filter circuit 13 includes: a first resistor 131, wherein a first end of the first resistor 131 serves as an input end of the first filter circuit 13; a second resistor 132 connected between a second end of the first resistor 131 and the ground; a first clamp device 133 connected with the second resistor 132 in parallel; a second clamp device 134 connected between the second end of the first resistor 131 and a DC power supply; an electrolytic capacitor 135 connected with the second resistor 132 in parallel; a current limiting device 136, wherein a first end of the current limiting device 136 is connected to the second end of the first resistor 131, and a second end of the current limiting device 136 serves as an output end of the first filter circuit; and a capacitive element 137 connected between the second end of the current limiting device 136 and the ground.

Specifically, after the magnetron current signal is input to the first filter circuit 13, the voltage is divided by the first resistor 131 and the second resistor 132 and is clamped by the first clamp device 133 and the second clamp device 134, so that the voltage is not higher than the DC power supply (VCC), nor lower than the GND (ground), and meanwhile, the filtering processing can be performed by the electrolytic capacitor 135 and the capacitive element 137 to convert the high frequency current signal into a low frequency DC signal. By connecting the capacitive element 137 between the second end of the current limiting device 136 and the ground, i.e., connecting the capacitive element to a position close to the output end of the first filter circuit 13, a better filtering effect can be achieved.

According to one embodiment of the present invention, the first clamp device 133 includes a first diode, a cathode of the first diode is connected to the second end of the first resistor 131, and an anode of the first diode is grounded.

According to one embodiment of the present invention, the second clamp device 134 includes a second diode, an anode of the second diode is connected to the second end of the first resistor 131, and a cathode of the second diode is connected to the DC power supply.

According to one embodiment of the present invention, the current limiting device 136 includes a resistive element.

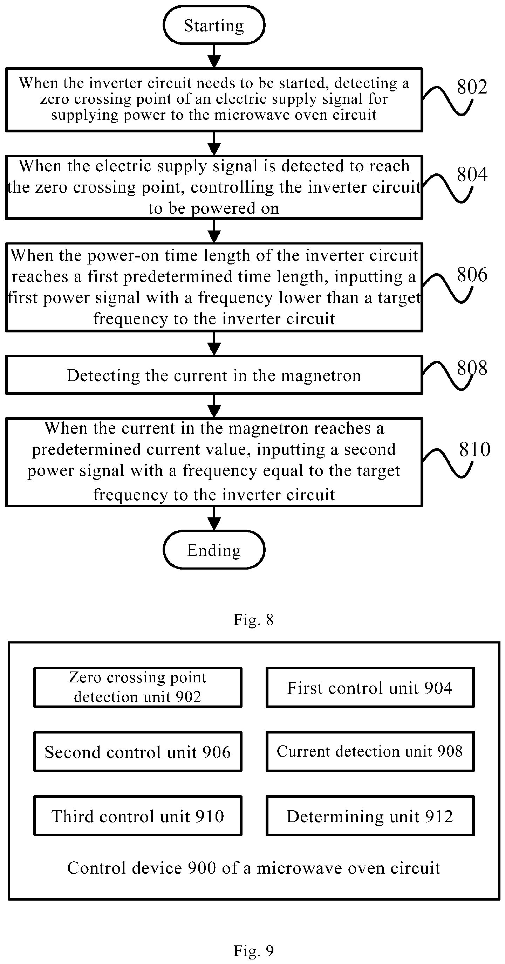

Fig. 8 shows a schematic flow diagram of a control method of a microwave oven circuit according to an embodiment of the present invention.

As shown in Fig. 8, the control method of the microwave oven circuit according to the embodiment of the present invention includes:
Step 802, when the inverter circuit needs to be started, detecting a zero crossing point of an electric supply signal for supplying power to the microwave oven circuit;
step 804, when the electric supply signal is detected to reach the zero crossing point, controlling the inverter circuit to be powered on;
step 806, when the power-on time length of the inverter circuit reaches a first predetermined time length, inputting a first power signal with a frequency lower than a target frequency to the inverter circuit;
step 808, detecting the current in the magnetron; and
step 810, when the current in the magnetron reaches a predetermined current value, inputting a second power signal with a frequency equal to the target frequency to the inverter circuit.

When the inverter circuit needs to be started, the zero crossing point of the electric supply signal is detected, and when the electric supply signal is detected to reach the zero crossing point, the inverter circuit is controlled to be powered on, therefore when the inverter circuit is powered on, a reverse voltage across a rectifier bridge stack can be effectively reduced, thereby improving the reliability of the microwave oven circuit and prolonging the service life of the rectifier bridge stack.

After the inverter circuit is powered on, the power signal is not directly input to the inverter circuit, but is input after delaying the first predetermined time length, so that power-on initialization time can be reserved for electronic devices in the inverter circuit to ensure the working stability of the inverter circuit.

When the power-on time length of the inverter circuit reaches the first predetermined time length, the first power signal with the frequency lower than the target frequency is input to the inverter circuit, and when it is detected the current in the magnetron reaches the predetermined current value (the predetermined current value indicates that the magnetron starts working), the power signal with the frequency equal to the target frequency is input to the inverter circuit, so that the inverter circuit can be started at a smaller power, and when the magnetron starts working, the inverter circuit operates with full power (i.e., the power signal with the target frequency is input), thereby avoiding the problem of power overshoot during the startup of the inverter circuit.

The control method of the microwave oven circuit according to the above embodiment of the present invention can further have the following technical features:

According to one embodiment of the present invention, the microwave oven circuit further includes a fan circuit and a turntable circuit, and the control method further includes:
when an instruction of starting a microwave oven is received, if the electric supply signal is detected to reach the zero crossing point, controlling the fan circuit and the turntable circuit to be turned on; and when the fan circuit and the turntable circuit are controlled to be turned on for a second predetermined time length, determining that the inverter circuit needs to be started.

Both a fan and a turntable are inductive loads, so electromagnetic radiation and voltage interference are generated when they are turned on, thus affecting the voltage of the G pole of the IGBT, therefore, when the instruction of starting the microwave oven is received, and when the electric supply signal is detected to reach the zero crossing point, the fan circuit and the turntable circuit are controlled to be turned on, and after delaying the second predetermined time length, the inverter circuit is controlled to be powered on (i.e., it is determined that the inverter circuit needs to be started), in this way, when the fan circuit and the turntable circuit are turned on, the interference to the voltage of the G pole of the IGBT can be effectively reduced so as to prevent the G pole of the IGBT from being damaged by the overlarge voltage and to prolong the service life of the IGBT.

According to one embodiment of the present invention, the control method further includes: when an instruction of turning off the microwave oven is received, stopping inputting the power signal to the inverter circuit; and when the time length of stopping inputting the power signal to the inverter circuit reaches a third predetermined time length, if the electric supply signal is detected to reach the zero crossing point, controlling the inverter circuit to be powered off.

When the input of the power signal to the inverter circuit is stopped, the inverter circuit undergoes a process in which the power is reduced to zero and a corresponding discharging process. Therefore, when the instruction of turning off the microwave oven is received, the input of the power signal to the inverter circuit is stopped, and after delaying the third predetermined time length, and when the electric supply signal is detected to reach the zero crossing point, the inverter circuit is controlled to be powered off, in this way, it is ensured that after the power of the inverter circuit is reduced to 0 and when the electric supply signal is at the zero crossing point, the inverter circuit is powered off, thus avoiding an abnormal problem generated by directly controlling the inverter circuit to be powered off when the input of the power signal is stopped.

According to one embodiment of the present invention, the control method further includes: after the inverter circuit is controlled to be powered off for a fourth predetermined time length, if the electric supply signal is detected to reach the zero crossing point, controlling the fan circuit and the turntable circuit to be powered off.

When the inverter circuit is controlled to be powered off for the fourth predetermined time length, and when the electric supply signal is detected to reach the zero crossing point, the fan circuit and the turntable circuit are controlled to be powered off, therefore the interference to the voltage of the G pole of the IGBT can be reduced, when the inductive loads (i.e., the fan and the turntable) are turned off.

According to one embodiment of the present invention, the first predetermined time length is greater than or equal to 300 milliseconds; the second predetermined time length is greater than or equal to 200 milliseconds; the third predetermined time length is greater than or equal to 200 milliseconds; and the fourth predetermined time length is greater than or equal to 600 milliseconds.

According to one embodiment of the present invention, the frequency of the first power signal is the lowest frequency for maintaining the continuous work of the inverter circuit, or the frequency of the first power signal is less than or equal to half of the lowest frequency for maintaining the continuous work of the inverter circuit.

According to one embodiment of the present invention, the predetermined current value is less than or equal to one-sixth of the current value in the magnetron when the inverter circuit works at the input of the target frequency.

In any one of the above embodiments, the power-on and power-off of the inverter circuit can be controlled by a microwave relay.

Fig. 9 shows a structural block diagram of a control device of a microwave oven circuit according to an embodiment of the present invention.

As shown in Fig. 9, the control device 900 of the microwave oven circuit according to the embodiment of the present invention includes: a zero crossing point detection unit 902, a first control unit 904, a second control unit 906 and a current detection unit 908.

The zero crossing point detection unit 902 is used for, when the inverter circuit needs to be started, detecting a zero crossing point of an electric supply signal for supplying power to the microwave oven circuit; the first control unit 904 is used for, when the zero crossing point detection unit 902 detects that the electric supply signal reaches the zero crossing point, controlling the inverter circuit to be powered on; the second control unit 906 is used for, when the power-on time length of the inverter circuit reaches a first predetermined time length, inputting a first power signal with a frequency lower than a target frequency to the inverter circuit, and when the current detection unit 908 detects that the current in the magnetron reaches a predetermined current value, inputting a second power signal with a frequency equal to the target frequency to the inverter circuit. The current detection unit 908 is used for detecting the current in the magnetron.

When the inverter circuit needs to be started, the zero crossing point of the electric supply signal is detected, and when the electric supply signal is detected to reach the zero crossing point, the inverter circuit is controlled to be powered on, therefore when the inverter circuit is powered on, a reverse voltage across a rectifier bridge stack can be effectively reduced, thereby improving the reliability of the microwave oven circuit and prolonging the service life of the rectifier bridge stack.

After the inverter circuit is powered on, the power signal is not directly input to the inverter circuit, but is input after delaying the first predetermined time length, so that power-on initialization time can be reserved for electronic devices in the inverter circuit to ensure the working stability of the inverter circuit.

When the power-on time length of the inverter circuit reaches the first predetermined time length, the first power signal with the frequency lower than the target frequency is input to the inverter circuit, and when it is detected the current in the magnetron reaches the predetermined current value (the predetermined current value indicates that the magnetron starts working), the power signal with the frequency equal to the target frequency is input to the inverter circuit, so that the inverter circuit can be started at a smaller power, and when the magnetron starts working, the inverter circuit operates with full power (i.e., the power signal with a frequency equal to the target frequency is input), thereby avoiding the problem of power overshoot during the startup of the inverter circuit.

The control device 900 of the microwave oven circuit according to the above embodiment of the present invention can further have the following technical features:
According to one embodiment of the present invention, the microwave oven circuit further includes a fan circuit and a turntable circuit, and the control device 900 further includes: a third control unit 910 used for, when an instruction of starting a microwave oven is received, if the current detection unit 908 detects that the electric supply signal reaches the zero crossing point, controlling the fan circuit and the turntable circuit to be turned on; and a determining unit 912 used for, when the third control unit 910 controls the fan circuit and the turntable circuit to be turned on for a second predetermined time length, determining that the inverter circuit needs to be started.

Both a fan and a turntable are inductive loads, so electromagnetic radiation and voltage interference are generated when they are turned on, thus affecting the voltage of the G pole of the IGBT, therefore, when the instruction of starting the microwave oven is received, and when the electric supply signal is detected to reach the zero crossing point, the fan circuit and the turntable circuit are controlled to be turned on, after delaying the second predetermined time length, the inverter circuit is controlled to be powered on (i.e., it is determined that the inverter circuit needs to be started), in this way, when the fan circuit and the turntable circuit are turned on, the interference to the voltage of the G pole of the IGBT can be effectively reduced so as to prevent the G pole of the IGBT from being damaged by the overlarge voltage and to prolong the service life of the IGBT.

According to one embodiment of the present invention, the second control unit 906 is further used for: when an instruction of turning off the microwave oven is received, stopping inputting the power signal to the inverter circuit; and the first control unit 904 is further used for: when the time length of stopping inputting the power signal to the inverter circuit by the second control unit 906 reaches a third predetermined time length, if the zero crossing point detection unit 902 detects that the electric supply signal reaches the zero crossing point, controlling the inverter circuit to be powered off.

When the input of the power signal to the inverter circuit is stopped, the inverter circuit undergoes a process in which the power is reduced to zero and a corresponding discharging process. Therefore, when the instruction of turning off the microwave oven is received, the input of the power signal to the inverter circuit is stopped, and after delaying the third predetermined time length, and when the electric supply signal is detected to reach the zero crossing point, the inverter circuit is controlled to be powered off, in this way, it is ensured that after the power of the inverter circuit is reduced to 0 and when the electric supply signal is at the zero crossing point, the inverter circuit is powered off, thus avoiding an abnormal problem generated by directly controlling the inverter circuit to be powered off when the input of the power signal is stopped.

According to one embodiment of the present invention, the third control unit 910 is further used for: after the inverter circuit is controlled by the first control unit 904 to be powered off for a fourth predetermined time length, if the electric supply signal is detected to reach the zero crossing point, controlling the fan circuit and the turntable circuit to be powered off.

When the inverter circuit is controlled to be powered off for the fourth predetermined time length, if the electric supply signal is detected to reach the zero crossing point, the fan circuit and the turntable circuit are controlled to be powered off, therefore the interference to the voltage of the G pole of the IGBT can be reduced, when the inductive loads (i.e., the fan and the turntable) are turned off.

In any one of the above embodiments, the power-on and power-off of the inverter circuit can be controlled by a microwave relay.

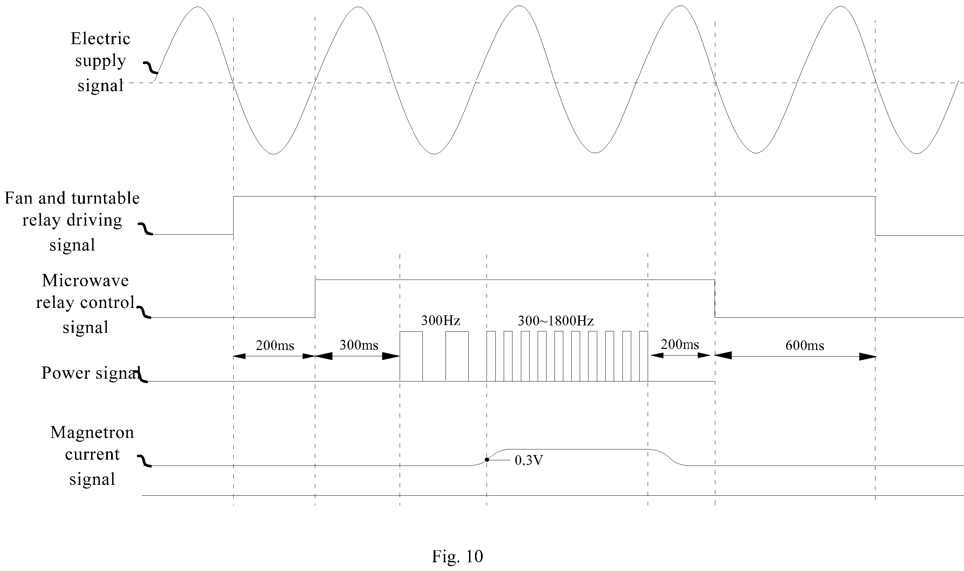

The overall control solution of the present invention will be described below with reference to Fig. 10.

Fig. 10 shows a schematic diagram of timing of signals in a control process of a microwave oven circuit according to an embodiment of the present invention.

The control solution in the related art is as follows: when the microwave relay (i.e., power is supplied to the inverter) of the microwave oven is started, the fan and the turntable relay are also turned on at the same time. Because the fan and the turntable are both inductive loads, electromagnetic radiation and voltage interference are generated during turn-on, meanwhile due to the complicated electric connecting lines of the microwave oven, it is impossible to focus on a specific line, and the radiation is also difficult to measure. Thus, in order to reduce the voltage abnormality (i.e., abnormal rise) of the G pole of the IGBT, in the embodiment, the interference of the fan and the turntable is minimized, and the specific process is as follows:
As shown in Fig. 10, when the instruction of starting the microwave oven is received, fan and turntable relays are started at the zero crossing point of the electric supply signal to delay for a period of time, for example, more than 200ms after the fan and the turntable are turned on, and then when the electric supply signal reaches the zero crossing point, the microwave relay is started to supply power to the inverter so as to reduce the interference signal to the voltage of the G pole of the IGBT generated by the simultaneous starting of the fan and turntable relays and the microwave relay. Moreover, when the electric supply signal reaches the zero crossing point, the microwave relay is started to avoid the damage to the entire rectifier bridge stack by the reverse high voltage generated to the rectifier bridge stack at the moment of starting the microwave relay. The starting process of the microwave relay is a power-on process of the inverter.

When the microwave relay is turned on, namely, when the electric power signal is provided for the inverter, the power signal is not immediately provided for the inverter, but a period of time is delayed, for example, more than 300ms to reserve an enough power-on initialization time for the devices in the inverter circuit to ensure no random action of the inverter. The stage is called an initialization stage.

Then, after the initialization stage, a preheating stage is executed to provide preheating frequency of 300Hz for the inverter. After the inverter receives the preheating frequency, the inverter is started at a smaller power to avoid the problem of power overshoot in the startup process. The preheating frequency can be the lowest frequency for maintaining the continuous work of the inverter, or any value less than or equal to half of the lowest frequency for maintaining the continuous work of the inverter.

At the preheating stage, the current signal of the magnetron is detected, an AD value is obtained by filtering and analog to digital conversion processing, and if the AD value is greater than a predetermined value, a full-power operation stage is entered.

Generally, the predetermined value is relatively small and is related to the value of the device shown in Fig. 7. In a preferred embodiment of the present invention, if the first resistor 131 is 10K, the second resistor 132 is 1M, and the electrolytic capacitor 135 is 2.2uF, at this time, the predetermined value can be selected as 0.3V, and 0.3V represents a symbol indicating that the magnetron starts working; however, the predetermined value cannot be too large, such as 0.5V or more, because at a low temperature, the current of the magnetron at the initial working stage is smaller than that at a room temperature, which will lead to always staying at the preheating stage.

In one embodiment of the present invention, the predetermined value compared with the AD value can be selected from any value less than or equal to one-sixth of the current signal in the magnetron when the electric control boards inputs a power signal with the target frequency to the inverter.

Finally, at the full-power operation stage, the electric control board inputs a power signal with the target frequency to the inverter.

For example, the electric control board needs to output a power of 1500W to the inverter, the electric control board outputs the preheating frequency of 300Hz at the preheating stage and outputs the frequency of 1500Hz when the AD value is greater than 0.3V, and in this way, the power overshoot problem in the startup process can be reduced.

When the inverter is running operating at full power, if the inverter is required to stop working, the input of the power signal to the inverter must be stopped at first, and after delaying for a period of time, such as more than 200ms, the microwave relay is turned off; because when the electric control board stops inputting the power signal to the inverter, the inverter needs to undergoes a process in which the power is reduced to zero and a corresponding discharging process, if the microwave relay is turned off quickly, the turning off process is incomplete, resulting in an abnormal phenomenon. Meanwhile, it should be noted that the microwave relay is turned off when the electric supply signal reaches the zero crossing point.

In addition, after the microwave relay is turned off, after a period of time, when the electric supply signal reaches the zero crossing point, the fan and the turntable relays are turned off, for example, the fan and the turntable relays are turned off 600ms later, which can also reduce the influence on the voltage of the G pole of the IGBT when the inductive loads are turned off.

It should be noted by those skilled in the art that the specific numerical values shown in Fig. 10 only represent one specific embodiment and are not specifically limited.

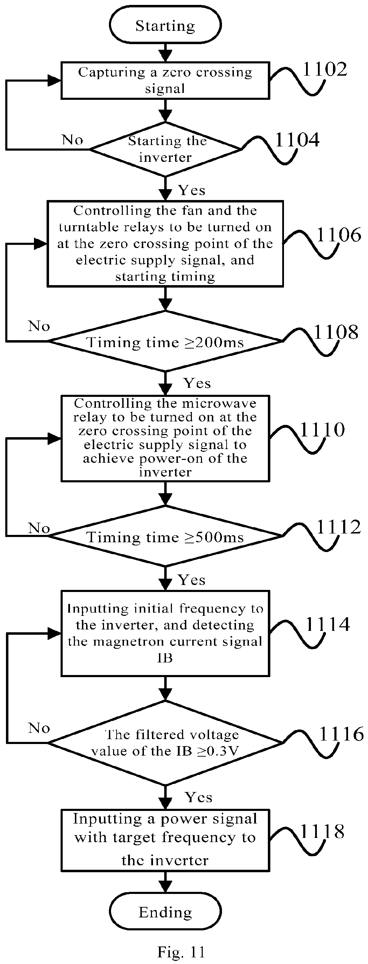

The process of starting the inverter shown in Fig. 10 is as shown in Fig. 11, including:
Step 1102, capturing a zero crossing signal of electric supply;
step 1104, judging whether the inverter is started, and if so, executing step 1106; otherwise, returning to step 1102;
step 1106, controlling the fan and the turntable relays to be turned on at the zero crossing point of the electric supply signal, and starting timing
step 1108, judging whether the timing time is greater than or equal to 200ms, and if so, executing step 1110; otherwise, returning to step 1106;
step 1110, controlling the microwave relay to be turned on when the electric supply signal reaches the zero crossing point to achieve power-on of the inverter;
step 1112, judging whether the timing time is greater than or equal to 500ms, and if so, executing step 1114; otherwise, returning to step 1110;
step 1114, inputting an initial power to the inverter, and detecting a current signal IB in the magnetron;
step 1116, judging whether a filtered voltage value of the IB is greater than or equal to 0.3V, and if so, executing step 1118; otherwise, returning to step 1114; and
step 1118, inputting the power signal with the target frequency to the inverter.

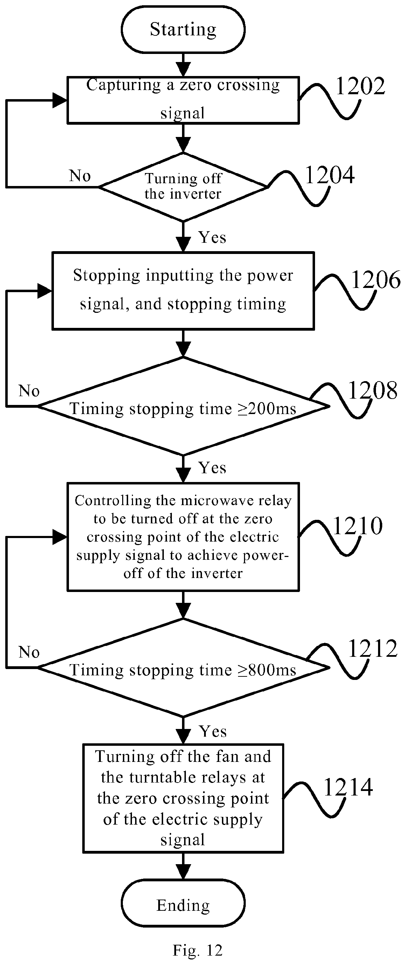

The process of turning off the inverter as shown in Fig. 10 is as shown in Fig. 12, including:
Step 1202, capturing a zero crossing signal of electric supply;
step 1204, judging whether the inverter is turned off, and if so, executing step 1206; otherwise, returning to step 1202;
step 1206, stopping inputting the power signal to the inverter, and stopping timing;
step 1208, judging whether the timing stopping time is greater than or equal to 200ms, and if so, executing step 1210; otherwise, returning to step 1206;
step 1210, controlling the microwave relay to be turned off when the electric supply signal reaches the zero crossing point to achieve power-off of the inverter;
step 1212, judging whether the timing stopping time is greater than or equal to 800ms, and if so, executing step 1214; otherwise, returning to step 1210; and
step 1214, turning off the fan and turntable relays at the zero crossing point of the electric supply signal.

In one embodiment of the present invention, since the microwave oven sold in Japan has a mandatory authentication requirement that the input current cannot exceed 15A, in order to meet the corresponding requirements, the control mode of the inverter in the microwave oven sold in Japan is distinguished from other conventional control modes, different preheating frequency modes are adopted, specifically, when the preheating frequency in the conventional control mode is 300Hz, the preheating frequency in the control mode of the inverter in the microwave oven sold in Japan is 100Hz.

In the technical solution of the above embodiment of the present invention, the current in the magnetron is used as the key signal for starting the inverter by the electric control board, and relatively reasonable design is performed on the starting and turning off of the inverter; meanwhile, the starting timing of other loads in the starting and turning off processes of the inverter is regulated accordingly to reduce the interference voltage of the G pole of the IGBT; and in addition, the electric power of the inverter is conveyed at the zero crossing point of the electric supply voltage, thereby reducing the reverse voltage across the rectifier bridge stack, improving the reliability and prolonging the service life of the rectifier circuit. The technical solution of the present invention has been described in detail above with reference to the drawings. The present invention proposes a new microwave oven circuit control solution, which can reduce the voltage across the rectifier bridge stack when the inverter is started so as to avoid damage to the rectifier bridge stack due to the excessively high voltage across the rectifier bridge stack and to prevent the G pole of the IGBT from being damaged by the overlarge voltage.

Described above are merely preferred embodiments of the present invention, which are not intended to limit the present invention. For those skilled in the art, the present invention may have various changes and modifications.

## Claims

1. A microwave oven circuit, comprising:
an electric control board (1) and a high frequency heating circuit (2); wherein the electric control board (1) comprises:
a power driving circuit (12) used for sending a power signal to the high frequency heating circuit (2);
a first filter circuit (13) connected to a signal feedback end of the high frequency heating circuit (2) and used for performing filtering processing on a magnetron current signal fed back by the high frequency heating circuit (2), the first filter circuit (13) comprising:
a first resistor (131), wherein a first end of the first resistor (131) serves as an input end of the first filter circuit (13);
an analog to digital conversion circuit (14) connected to the first filter circuit (13) and used for performing analog to digital conversion processing on the signal output by the first filter circuit (13); and
a controller (15) connected to the analog to digital conversion circuit (14) and the power driving circuit (12) and used for controlling the power signal transmitted by the power driving circuit (12) according to the signal output by the analog to digital conversion circuit (14); the microwave oven circuit being **characterized in that**: the electric control board (1) comprises a relay driving circuit (11) used for transmitting an electric power signal to the high frequency heating circuit (2); the controller (15) is connected to the relay driving circuit (11) and is used for controlling the electric power signal transmitted by the relay driving circuit (11) according to the signal output by the analog to digital conversion circuit (14); and the first filter circuit (13) comprises : a second resistor (132) connected between a second end of the first resistor (131) and the ground; a first clamp device (133) connected with the second resistor (132) in parallel;
a second clamp device (134) connected between the second end of the first resistor (131) and a DC power supply; an electrolytic capacitor (135) connected with the second resistor (132) in parallel; a current limiting device (136), wherein a first end of the current limiting device (136) is connected to the second end of the first resistor (131), and the second end of the current limiting device (136) serves as an output end of the first filter circuit (13); and a capacitive element (137) connected between the second end of the current limiting device (136) and the ground.

2. The microwave oven circuit according to claim 1, wherein the high frequency heating circuit (2) comprises:
a magnetron (21) used for generating microwaves;
an inverter circuit (22) connected to the magnetron (21) and used for receiving the electric power signal transmitted by the relay driving circuit (11) and the power signal transmitted by the power driving circuit (12), and driving the magnetron (21) to generate the microwaves according to the electric power signal and the power signal; and
a sampling feedback circuit used for sampling the current in the magnetron (21) and feeding back a sampled magnetron current signal to the electric control board (1).

3. The microwave oven circuit according to claim 2, wherein the inverter circuit (22) comprises:
a rectifier circuit (221) connected to an AC power supply and used for rectifying AC input by the AC power supply;
a second filter circuit (222) connected to the rectifier circuit (221) and used for performing filtering processing on a signal output by the rectifier circuit (221);
a resonant circuit comprising a resonant capacitor (223) and a high frequency step-up transformer (224), wherein the resonant capacitor (223) is connected to two ends of the second filter circuit (222) in parallel after being connected with an IGBT (225) in series, and a primary coil of the high frequency step-up transformer (224) is connected with the resonant capacitor (223) in parallel; and
a voltage doubling circuit (226) connected to a secondary coil of the high frequency step-up transformer (224) and used for generating a voltage for driving the magnetron (21).

4. The microwave oven circuit according to claim 1, wherein the first clamp device (133) comprises a first diode, a cathode of the first diode is connected to the second end of the first resistor (131), and an anode of the first diode is grounded.

5. The microwave oven circuit according to claim 1, wherein the second clamp device (134) comprises a second diode, an anode of the second diode is connected to the second end of the first resistor (131), and a cathode of the second diode is connected to the DC power supply.

6. A microwave oven, comprising:
the microwave oven circuit according to any one of claims 1-5.

## Patentansprüche

1. Mikrowellenherdschaltung, die Folgendes aufweist:
eine elektrische Steuerplatine (1) und eine Hochfrequenzheizungsschaltung (2); wobei die elektrische Steuerplatine (1) Folgendes aufweist:
eine Leistungsansteuerschaltung (12), die zum Senden eines Leistungssignals an die Hochfrequenzheizungsschaltung (2) verwendet wird;
eine erste Filterschaltung (13), die mit einem Signalrückkopplungsende der Hochfrequenzheizungsschaltung (2) verbunden ist und zum Durchführen von filternder Verarbeitung an einem von der Hochfrequenzheizungsschaltung (2) zurückgekoppelten Magnetronstromsignal verwendet wird, wobei die erste Filterschaltung (13) Folgendes aufweist:
einen ersten Widerstand (131), wobei ein erstes Ende des ersten Widerstands (131) als ein Eingangsende der ersten Filterschaltung (13) dient;
eine Analog-Digital-Umsetzungsschaltung (14), die mit der ersten Filterschaltung (13) verbunden ist und zum Durchführen von Analog-Digital-Umsetzungsverarbeitung an dem von der ersten Filterschaltung (13) ausgegebenen Signal verwendet wird; und
einen Controller (15), der mit der Analog-Digital-Umsetzungsschaltung (14) und der Leistungsansteuerschaltung (12) verbunden ist und zum Steuern des von der Leistungssteuerschaltung (12) übertragenen Leistungssignals gemäß dem von der Analog-Digital-Umsetzungsschaltung (14) ausgegebenen Signal verwendet wird; wobei die Mikrowellenherdschaltung **dadurch gekennzeichnet ist, dass**: die elektrische Steuerplatine (1) eine Relaisansteuerschaltung (11) aufweist, die zum Übertragen eines elektrischen Leistungssignals an die Hochfrequenzheizungsschaltung (2) verwendet wird; der Controller (15) mit der Relaisansteuerschaltung (11) verbunden ist und zum Steuern des von der Relaisansteuerschaltung (11) übertragenen elektrischen Leistungssignals gemäß dem von der Analog-Digital-Umsetzungsschaltung (14) ausgegebenen Signal verwendet wird; und die erste Filterschaltung (13) Folgendes aufweist: einen zweiten Widerstand (132), der zwischen ein zweites Ende des ersten Widerstands (131) und Masse geschaltet ist; eine erste Klemmvorrichtung (133), die mit dem zweiten Widerstand (132) parallelgeschaltet ist; eine zweite Klemmvorrichtung (134), die zwischen das zweite Ende des ersten Widerstands (131) und eine Gleichstromversorgung geschaltet ist; einen Elektrolytkondensator (135), der mit dem zweiten Widerstand (132) parallelgeschaltet ist; eine Strombegrenzungsvorrichtung (136), wobei ein erstes Ende der Strombegrenzungsvorrichtung (136) mit dem zweiten Ende des ersten Widerstands (131) verbunden ist und das zweite Ende der Strombegrenzungsvorrichtung (136) als ein Ausgabeende der ersten Filterschaltung (13) dient; und ein kapazitives Element (137), das zwischen das zweite Ende der Strombegrenzungsvorrichtung (136) und Masse geschaltet ist.

2. Mikrowellenherdschaltung nach Anspruch 1, wobei die Hochfrequenzheizungsschaltung (2) Folgendes aufweist:
ein Magnetron (21), das zur Erzeugung von Mikrowellen verwendet wird;
eine Wechselrichterschaltung (22), die mit dem Magnetron (21) verbunden und zum Empfangen des von der Relaisansteuerschaltung (11) übertragenen elektrischen Leistungssignals und des von der Leistungsansteuerschaltung (12) übertragenen Leistungssignals und zum Ansteuern des Magnetrons (21) zum Erzeugen der Mikrowellen gemäß dem elektrischen Leistungssignal und dem Leistungssignal verwendet wird; und
eine Abtastungs-/Rückkopplungsschaltung, die zum Abtasten des Stroms im Magnetron (21) und zum Rückkoppeln eines abgetasteten Magnetronstromsignals zur elektrischen Steuerplatine (1) verwendet wird.

3. Mikrowellenherdschaltung nach Anspruch 2, wobei die Wechselrichterschaltung (22) Folgendes aufweist:
eine Gleichrichterschaltung (221), die mit einer Wechselstromversorgung verbunden ist und zum Gleichrichten eines von der Wechselstromversorgung eingegebenen Wechselstroms verwendet wird;
eine zweite Filterschaltung (222), die mit der Gleichrichterschaltung (221) verbunden ist und zum Durchführen filternder Verarbeitung an einem von der Gleichrichterschaltung (221) ausgegebenen Signal verwendet wird;
einen Schwingkreis, der einen Resonanzkondensator (223) und einen Hochfrequenzaufwärtstransformator (224) aufweist, wobei der Resonanzkondensator (223) nach In-Reihe-Schalten mit einer IGBT (225) mit zwei Enden der zweiten Filterschaltung (222) parallelgeschaltet ist, und eine Primärwicklung des Hochfrequenzaufwärtstransformators (224) mit dem Resonanzkondensator (223) parallelgeschaltet ist; und
eine Spannungsverdopplungsschaltung (226), die mit einer Sekundärwicklung des Hochfrequenzaufwärtstransformators (224) verbunden ist und zum Erzeugen einer Spannung zum Ansteuern des Magnetrons (21) verwendet wird.

4. Mikrowellenherdschaltung nach Anspruch 1, wobei die erste Klemmvorrichtung (133) eine erste Diode aufweist, eine Kathode der ersten Diode mit dem zweiten Ende des ersten Widerstands (131) verbunden ist und eine Anode der ersten Diode geerdet ist.

5. Mikrowellenherdschaltung nach Anspruch 1, wobei die zweite Klemmvorrichtung (134) eine zweite Diode aufweist, wobei eine Anode der zweiten Diode mit dem zweiten Ende des ersten Widerstands (131) verbunden ist und eine Kathode der zweiten Diode mit der Gleichstromversorgung verbunden ist.

6. Mikrowellenherd, der Folgendes aufweist: die Mikrowellenherdschaltung nach einem der Ansprüche 1-5.

## Revendications

1. Circuit de four à micro-ondes, comprenant :
un tableau de commande électrique (1) et un circuit de chauffage haute fréquence (2) ;
dans lequel le tableau de commande électrique (1) comprend :
un circuit d'attaque électrique (12) utilisé pour un envoi d'un signal d'alimentation au circuit de chauffage haute fréquence (2) ;
un premier circuit de filtrage (13) connecté à une extrémité de retour de signal du circuit de chauffage haute fréquence (2) et utilisé pour une réalisation d'un traitement de filtrage sur un signal de courant magnétron renvoyé par le circuit de chauffage haute fréquence (2), le premier circuit de filtrage (13) comprenant :
une première résistance (131), dans lequel une première extrémité de la première résistance (131) sert d'extrémité d'entrée du premier circuit de filtrage (13) ;
un circuit de conversion analogique-numérique (14) connecté au premier circuit de filtrage (13) et utilisé pour une réalisation d'un traitement de conversion analogique-numérique sur le signal émis en sortie par le premier circuit de filtrage (13) ; et
un dispositif de commande (15) connecté au circuit de conversion analogique-numérique (14) et au circuit d'attaque électrique (12) et utilisé pour une commande du signal d'alimentation transmis par le circuit d'attaque électrique (12) selon le signal émis en sortie par le circuit de conversion analogique-numérique (14) ; le circuit de four à micro-ondes étant **caractérisé en ce que** : le tableau de commande électrique (1) comprend un circuit d'attaque de relais (11) utilisé pour une transmission d'un signal d'alimentation électrique au circuit de chauffage haute fréquence (2) ; le dispositif de commande (15) est connecté au circuit d'attaque de relais (11) et utilisé pour une commande du signal d'alimentation électrique transmis par le circuit d'attaque de relais (11) selon le signal émis en sortie par le circuit de conversion analogique-numérique (14) ; et le premier circuit de filtrage (13) comprend : une seconde résistance (132) connectée entre une seconde extrémité de la première résistance (131) et la terre ; un premier dispositif de serrage (133) connecté à la seconde résistance (132) en parallèle ; un second dispositif de serrage (134) connecté entre la seconde extrémité de la première résistance (131) et une alimentation électrique CC ; un condensateur électrolytique (135) connecté à la seconde résistance (132) en parallèle ;
un dispositif de limitation de courant (136), dans lequel une première extrémité du dispositif de limitation de courant (136) est connectée à la seconde extrémité de la première résistance (131), et la seconde extrémité du dispositif de limitation de courant (136) sert d'extrémité de sortie du premier circuit de filtrage (13) ; et un élément capacitif (137) connecté entre la seconde extrémité du dispositif de limitation de courant (136) et la terre.

2. Circuit de four à micro-ondes selon la revendication 1, dans lequel le circuit de chauffage haute fréquence (2) comprend :
un magnétron (21) utilisé pour une génération de micro-ondes ;
un circuit inverseur (22) connecté au magnétron (21) et utilisé pour une réception du signal d'alimentation électrique transmis par le circuit d'attaque de relais (11) et le signal d'alimentation transmis par le circuit d'attaque électrique (12), et un entraînement du magnétron (21) pour générer les micro-ondes selon le signal d'alimentation électrique et le signal d'alimentation ; et
un circuit de retour d'échantillonnage utilisé pour un échantillonnage du courant dans le magnétron (21) et un retour d'un signal de courant magnétron échantillonné au tableau de commande électrique (1).

3. Circuit de four à micro-ondes selon la revendication 2, dans lequel le circuit inverseur (22) comprend :
un circuit redresseur (221) connecté à une alimentation électrique CA et utilisé pour redresser une entrée CA par l'alimentation électrique CA ;
un second circuit de filtrage (222) connecté au circuit redresseur (221) et utilisé pour une réalisation d'un traitement de filtrage sur un signal émis en sortie par le circuit redresseur (221) ;
un circuit résonant comprenant un condensateur résonant (223) et un transformateur élévateur haute fréquence (224), dans lequel le condensateur résonant (223) est connecté à deux extrémités du second circuit de filtrage (222) en parallèle après être connecté avec un IGBT (225) en série, et une bobine principale du transformateur élévateur haute fréquence (224) est connectée au condensateur résonant (223) en parallèle ; et
un circuit doubleur de tension (226) connecté à une bobine secondaire du transformateur élévateur haute fréquence (224) et utilisé pour une génération d'une tension pour un entraînement du magnétron (21).

4. Circuit de four à micro-ondes selon la revendication 1, dans lequel le premier dispositif de serrage (133) comprend une première diode, une cathode de la première diode est connectée à la seconde extrémité de la première résistance (131), et une anode de la première diode est reliée à la terre.

5. Circuit de four à micro-ondes selon la revendication 1, dans lequel le second dispositif de serrage (134) comprend une seconde diode, une anode de la seconde diode est connectée à la seconde extrémité de la première résistance (131), et une cathode de la seconde diode est connectée à l'alimentation électrique CC.

6. Four à micro-ondes, comprenant :
le circuit de four à micro-ondes selon l'une quelconque des revendications 1 à 5.
